# EUROPEAN PATENT SPECIFICATION

(11) **EP 1 885 075 B1**
(45) Date of publication and mention of the grant of the patent: **11.02.2009**
(21) Application number: 06015881.3
(22) Date of filing: 31.07.2006
(51) Int. Cl.: H04B 1/16

(54) **Method and data processing unit for operating and synchronising a transceiver in a sensor network**
Verfahren und Datenverarbeitungseinheit zum Betrieb und Synchronisation eines Sender/Empfängers in einem Sensornetzwerk
Méthode et unité de traitement de données pour opérer et synchroniser un émetteur-récepteur dans un réseau de capteurs

(43) Date of publication of application: 06.02.2008
(73) Proprietor: Particle Comuter GmbH, 76131 Karlsruhe (DE)
(72) Inventor: Beigl, Michael, Prof., 38102 Braunschweig (DE); Krohn, Albert, 76131 Karlsruhe (DE)
(74) Representative: Geitz, Holger

(56) References cited:
- US-A1- 2005 044 276
- SAURABH GANERIWAL, RAM KUMAR, MANI B. SRIVASTAVA: "Timing-sync Protocol for Sensor Networks" SENSYS '03, [Online] 5 November 2003 (2003-11-05), pages 138-149, XP002416109 Los Angeles Retrieved from the Internet: URL:http://delivery.acm.org/10.1145/960000 /958508/p138-ganeriwal.pdf?key1=958508&key 2=6023459611&coll=portal&dl=ACM&CFID=12188 599&CFTOKEN=50168685> [retrieved on 2007-01-23]

## Description

The invention relates to a method and a data processing unit for operating a transceiver, wherein said transceiver is comprised with a data processing unit and capable of receiving radio signals being composed of separate frames, these frames comprising a header and reference data, said method comprising the steps of examining the header of each frame and, in consideration of this examination, deciding whether or not the reference data shall be received by the transceiver and switching the transceiver to a standby state if the reception of the frames reference data is considered unwanted and return to an active state only in the next time slot.

An according method is disclosed in the United States Patent Application Publication US 2005/0044276 Al. This application concerns a communication device, which only receives a complete message after checking the message's header for a valid header field.

A method for synchronization is also known from the article "Timing-sync Protocol for Sensor Networks" SENSYS '03, [Online] 5 November 2003 of Saurabh Ganeriwal, Ram Kulmar and Mani B. Srivastava. In a central communication organization, nodes are synchronized in pairs, whereby this synchronization is followed by the exchange of data packages.

A method as described above is also known from the United States Patent No. 5,905,443. Said patent discloses a satellite system, wherein in a first step the frame header of the radio signal is received. Thereinafter is determined, if the radio signal carries the receiver's address, and if so, the frame is received. If however the received address does not match the receiver's address, the reception of the frame is stopped and the transceiver switches into an energy saving standby state. After the time slot, in which said frame was transmitted, has elapsed, the transceiver switches back to an active state, synchronizes with the next frame header and continues by determining whether or not the next frame should be received completely. A similar method is disclosed in the United States Patent 6,097,933.

In order to save energy by not receiving unneeded data, the French patent application No. 2 726 147 A1 discloses a method, wherein the frame headers are examined to find information about the length of the following data block. The frame header also comprises information about the actually used data fields within the said block. After the actually used data is received, the transceiver is switched to standby mode in order not to receive the blocks wherein the transmitted data is invalid.

From the above-mentioned state-of-the-art arises the following problem: If a message is to be transmitted from one node to several other nodes within a network, it is required to first synchronize with every node to be addressed with the planned radio signal. Then, the radio signal frame must contain the address of every node, or there are multiple radio signals required. This would on the other hand lead to a lot of redundant information to be received by each node, in the case of multiple radio signals even to several time slots lost for more vital information.

In regard of the aforementioned state-of-the-art, the task of the invention in hand is to provide a method and a data processing unit for operating a transceiver, being capable of saving energy in battery powered units, by reducing the quantity of redundancy within the radio communication.

This is achieved by the method for operating a transceiver according to claim 1 and the data processing unit according to claim 17. Further improvements of this invention can be found within the subsidiary claims.

According to the invention, the decision whether or not a frame should be received by the transceiver is made upon frame type information comprised with the frame header. This frame type information is received by the transceiver as part of the frame header and transferred to the data processing unit. The frame type information gives a brief instruction of what will follow in the frame's reference data block. Thus, the frame type information could for instance be "this frame contains temperature data". A data processing unit for which temperature data is of no interest at all will now decide not to receive the rest of the frame. It will power down the transceiver, switch to a standby state and wait until the end of the current time slot. At the end of the said time slot, the transceiver will be powered up again and synchronize with other transceivers in range. As soon as the next frame header is received, the same process will start over and again will be decided whether or not the frame is to be received completely or abandoned by means of the frame type information.

When synchronizing for the first time, the transceiver cannot know exactly when a time slot begins or where it ends, so an initial synchronization will start by first listening for a defined period of time for synchronization signals. If, within a defined period of time, such a synchronization signal is not received, the transceiver will transmit a synchronization signal of its own and wait if there is a response from another transceiver. If however a synchronization signal is received, the transceiver will set its local clock and thus know when the next time slot will begin.

In order to always having at least one transceiver send a synchronization signal at a time in a certain range, it is before the begin of every time slot randomly decided by each transceiver, if a synchronization signal is to be sent or the transceiver should listen for a synchronization signal from another transceiver. Like this, there is no master node required, which controls the synchronization process. In fact, a real peer-to-peer network is set up with completely equal nodes.

In the course of the synchronization, if the transceiver decides to wait for a synchronization signal from another transceiver, it is possible that no synchronization signal is received due to the possible absence of any further transceiver. In this case, the synchronization process is restarted from the beginning, which is first waiting for a synchronization signal from another transceiver and after a defined period of time sending a synchronization signal of its own.

For receiving the radio signals properly, it is necessary to determine the time positions of the time slots to follow as exactly as possible. Therefore, the synchronization signals of the other transceivers are required, but due to the random decision whether or not a signal is sent by the transceiver, there may be several signals overlapping each other. This is handled by the data processing units by receiving the whole overlapping signal and determining the mean signal position within the overlapping signals.

A more exact determination of the mean signal position can be achieved by assessing the number of transceivers communicating with the data processing unit at a time. By means of this kind of synchronization, the synchronization time can altogether be shortened down to 4 % of the frame time and by shutting down the transceiver after this time, the lifetime of a battery supporting the data processing unit can be prolonged enormously.

Having synchronized properly, the transceivers in range decide which one will send a frame next by means of a CSMA/CR (carrier sense multiple access with collision resolution) protocol. By choosing a random binary number and sending this number, the channel access is determined. The transceiver with the random number of the highest dominance will be granted channel access, whereby a "0" is more dominant than a "1". Thus, with one first transceiver sending "001010" and a second transceiver sending "011110", the following will occur : after the first number is sent, nothing will have happened because these numbers are equal. in second place, the first transceiver has "0" and the second transceiver has "1" which is less dominant, so the first transceiver will be granted channel access.

The data processing units forming a communication network as described above are advantageously completely equal to each other. This means, that there is no master node required, which would initiate communication with the slave nodes, control the signal traffic and maintain a list wherein the network nodes must be entered. The nodes do manage the network on their own by randomly deciding to listen or to send a synchronization signal. Thus, even only two random data processing units would already form a complete network.

There is an advantage to be found in the data processing unit comprising a memory unit, in which a list of frame type information of interest is stored. When receiving a frame header and reading the header's frame type information, this information is compared to the said list and in the case that the information is found within the list, the data processing unit considers the information in the frame wanted. If however the frame type information of the received frame header is not part of said list, the transceiver is powered down and the frame is not to be received completely.

Since the data processing units are set up to be equal to each other, it is necessary, that they are not only capable of the receiving frame type information, but also including frame type information of their own within every frame of any radio transmission made by the data processing unit itself. Thereby the frame type information could for example contain information about the data processing unit itself, its defined position, its serial number etc. or it could qualify information attached in the frames reference data block, which could for example contain sensor readings or a standard information block.

In order to provide sensor data it may be profitable to assign at least one sensor to the data processing unit. This sensor could be read by the data processing unit in a defined frequency and the readings can later on be transmitted into the network.

On the other hand, receiving and processing a radio signal from another data processing unit can cause a data processing unit comprising at least one actuator, such as a relay or a signaler, to trigger this actuator and thus to react to the information received.

Although there is in general only a peer-to-peer network realized, said network can nevertheless be connected to another data network, preferably the Internet, via a bridge. This bridge is installed stationary in one place, while all network nodes in range will gain access to the said data network when communicating with the bridge. In further development of this idea, the bridge is also used for maintaining a time service. In this case, the bridge will only be transmitting synchronization signals.

When using a plurality of bridges, it is possible to determine the position of each transceiver by just knowing where the bridge is located. If a bridge is situated in room A and a transceiver communicates with this bridge, the transceiver is considered being in room A too. If there is a second bridge in room B and this bridge also receives data from the said transceiver, the transceiver is considered to be in the room of the bridge, where the received signal is stronger.

Since there is information stored in the memory of the data processing unit and in the data processing unit itself, it is considered an advantage to have the data processing unit programmable over its transceiver.

The invention is pointed out with particularity in the appended claims. However, other features of the invention will become more apparent and the invention will be best understood by referring to the following detailed description in conjunction with the accompanying drawings in which:
- Fig. 1: shows a radio signal frame in a time based block diagram,
- Fig. 2: shows a synchronization process in a state-based block diagram,
- Fig. 3: shows a communication process in a state-based block diagram and
- Fig. 4: shows an example of use of the invention.

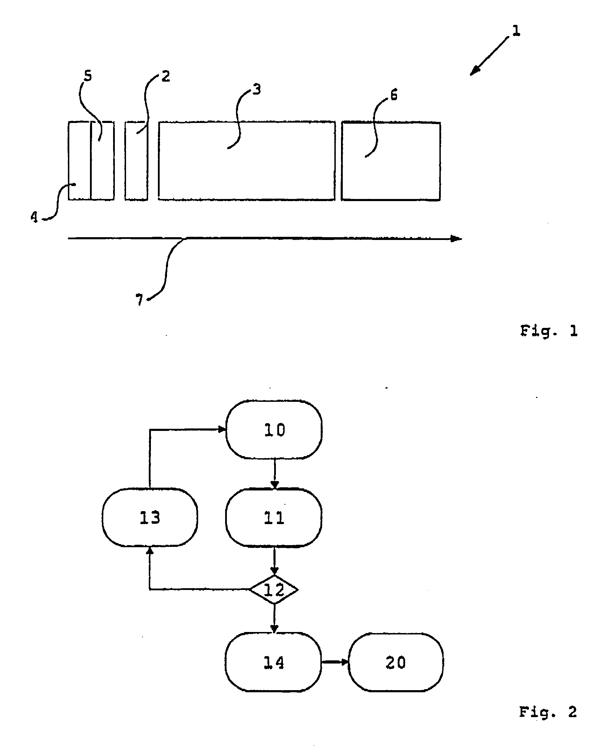

Fig. 1 shows a signal frame 1 of a radio signal transmission between 2 data processing units. Said signal frame consists of a frame header 2 and reference data 3, which represent the radio message as such. Preceding this radio message, there is also a synchronization signal 4 and the channel access time 5 are also to be considered when determining the duration of a single frame transmission. To complete the examination of the signal frame 1, it must also be considered, that the signal frame 1 is assigned to a time slot of a fixed duration, so in the assured application time 6 is also to be mentioned in this diagram. For orientation, there is a time axis 7 given in fig. as well.

A data processing unit receiving signal frame 1 will first synchronize by reading the synchronization signal 4. After synchronization has taken place successfully, the data processing unit will need to access the channel.

Therefore, the transceivers in range choose a random number to decide which one of them will send a frame next by means of a CSMA/CR (carrier sense multiple access with collision resolution) protocol. In the appropriate time slot, they will send this random number- The transceiver with the random number of the highest dominance will be granted channel access, whereby a "0" is more dominant than a "1". Thus, with one first transceiver sending "001010" and a second transceiver sending "011110", the following will occur: after the first number is sent, nothing will have happened because these numbers are equal. in second place, the first transceiver has "0" and the second transceiver has "1" which is less dominant, so the first transceiver will be granted channel access.

Then, the data processing unit will have to receive the frame header 2 next. After the receiving the frame header 2, but before receiving the reference data 3 of the signal frame 1, the data processing unit reads the frame header and examines the therein comprised frame type information. The frame type information characterizes the information carried in the reference data field 3 and allows the data processing unit to determine whether the reference data 3 is of interest or not. If the data processing unit decides, that the reference data 3 is of interest, it will continue receiving the frame until the end and then react to the frame information. If the frame is considered unwanted, the data processing unit will switch its transceiver to a standby state and wait until the end of the time slot. At the end of time slot, the data processing unit will switch the transceiver back to an active state, resynchronize and then decide whether or not the next frame will be received completely.

The determination whether or not the receipt takes place is made upon a list of possible frame type information entries, which is stored in a memory assigned to the data processing unit. In this memory unit is stored information about the behavior of the data processing unit.

Fig. 2 shows a state diagram, in which the synchronization process can be followed. The process starts in a non-synchronized state 10 and moves over to a search for synchronization signals 11. If a synchronization signal is found, the internal clock is set according to the received synchronization signal in state 14 and the system moves to synchronized state 20. If there is no synchronization signal received however, the system reacts by sending a synchronization signal of its own in state 13 and returns to the non-synchronized state 10.

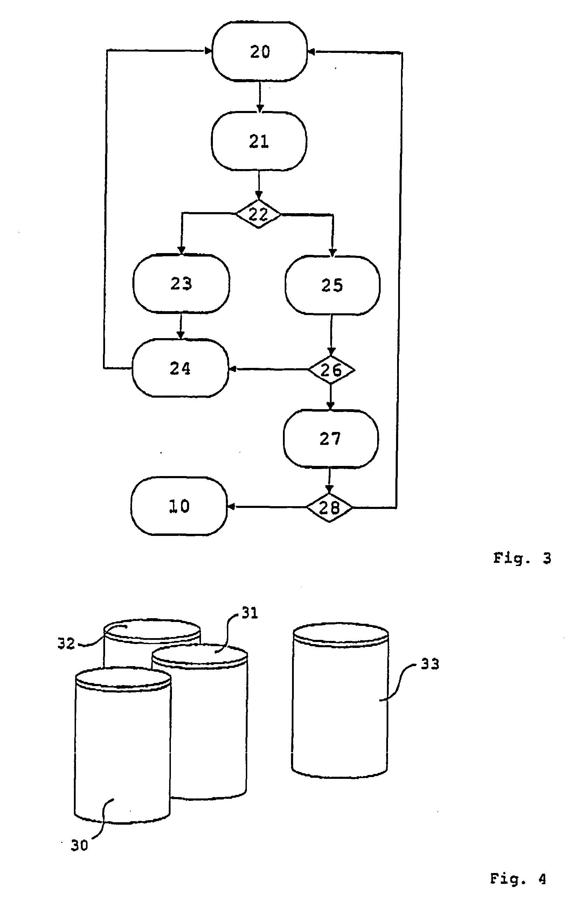

Fig. 3 shows a state diagram in which the communication process can be seen. Having accomplished the synchronization and entered the synchronized state 20, the system will in state 21 randomly decide if it will wait for a foreign synchronization signal to be received or if a synchronization signal is sent of its own. By means of this random decision, the network consisting of a plurality of data processing units of the described sort can renounce a master node, which would otherwise be responsible for the synchronization of the whole network. Like this, every node in the network takes from time to time the role of the master and the slave node. Now if the decision is to send a synchronization signal, the synchronization timeout is reset to the default value in state 24 and finally the system enters the synchronized state 20 again. If the decision is to wait for a foreign synchronization signal, the system will wait for a defined period of time. If within this time the system has received a synchronization signal, it moves to state 24, resets the timeout counter and also returns to synchronized state 20. If no signal is received however, the timeout counter is decreased by one in step 27 and the system returns once again to synchronized state 20. Once the reset counter reaches zero after decreasing in state 27, the system ceases to be synchronized and returns to non-synchronized state 10.

Fig. 4 shows an example of use, wherein the data processing units are realized as microcomputers, which can be assigned to items of everyday use. Here, the data processing units are assigned to different barrels, namely a barrel with water 30, and barrel with grain 31 and a barrel with flour 32. The data processing units assigned to these barrels have synchronized already and are communicating according to the protocol described with fig. 3. The signals sent in state 23 contain information about the contents of the barrels, that is the data processing unit of that road 30 knows the information and that the barrel contains water, the data processing unit of barrel 31 transmits frames saying it contains grain and so on. Into this communication between said three data processing units now enters another barrel 33 containing pesticides. This barrel's data processing unit synchronizes to the network of the other three data processing units and in the course of its communication sends in the information, that barrel 33 holds pesticides. Receiving such a frame from barrel 33, the data processing units of the barrels containing food will find, that storing pesticides together with food is not allowed according to their rules stored in their memories and will trigger an alarm sound, informing the storage workers about the detected danger.

In connection with the energy saving early shutdown protocol, which allows to save the energy for the data processing unit's transceiver as long as no frame of interest can be received, the data processing units can remain without extern electricity for an enormously prolonged period of time.

### REFERENCE LIST

- 1: signal frame
- 2: frame header
- 3: reference data
- 4: synchronization signal
- 5: channel access
- 6: assured application time
- 7: time axis
- 10: non-synchronized state
- 11: search for synchronization signals
- 12: synchronization found?
- 13: if no: send synchronization signal
- 14: if yes: set clock
- 20: synchronized state
- 21: randomly decide if wait or send signal
- 22: wait or send?
- 23: if send: send synchronization signal
- 24: reset timeout counter
- 25: if wait: receive synchronization signal
- 26: received signal?
- 27: if no: decrease timeout counter
- 28: timeout counter is zero?
- 30: barrel with water
- 31: barrel with grain
- 32: barrel with flour
- 33: barrel with pesticides

## Claims

1. A method for operating a transceiver, wherein said transceiver is comprised with a data processing unit and capable of receiving from other transceivers radio signals being composed of separate frames (1), these frames (1) comprising a header (2) and reference data (3), said method comprising the steps of examining the header (2) of each frame (1) and, in consideration of this examination, deciding whether or not the reference data (3) shall be received by the transceiver, switching the transceiver to a standby state if the reception of the frame's (1) reference data (3) is considered unwanted and return to an active state only in the next time slot,
**characterized in that** the header (2) contains frame type information which gives a brief instruction of what will follow in the frame's reference data block and the transceiver considers on his own whether or not a frame's (1) reference data (3) is wanted or unwanted regarding the received frame type information.

2. A method according to claim 1, **characterized in that** each frame (1) contains a synchronization signal (4) for determining a time slot for sending and receiving frames (1) and a synchronization is conducted by the transceiver by first listening for a defined period of time for synchronization signals (4) and, if non-such is received, sending a synchronization signal (4) or, if a synchronization signal (4) is received, setting the local clock (14).

3. A method according to claim 2, **characterized in that**, after synchronization is conducted, before the begin of every time slot the transceiver decides randomly if a synchronization signal (4) is to be sent or if the transceiver should listen for a synchronization signal (4) from another transceiver.

4. A method according to claim 3, **characterized in that** if, while waiting for a synchronization signal (4), such a synchronization signal (4) is not received for a defined period of time, the synchronization process is restarted.

5. A method according to one of claims 2 to 4, **characterized in that** by receiving and averaging overlapping synchronization signals (4) a time position of the time slots is determined.

6. A method according to one of claims 2 to 5, **characterized in that** the number of further transceivers to be communicated with is assessed by the data processing unit.

7. A method according to claim 6, **characterized in that** all data processing units of all transceivers communicate on equal terms, preferably forming a peer-to-peer network.

8. A method according to claim 7, **characterized in that** each data processing unit comprises a memory unit, in which frame type information of interest is stored, and the data processing unit considers a frame's (1) reference data (3) wanted when its frame type information is comprised with in said frame type information of interest.

9. A method according to one of the precedent claims, **characterized in that** a frame sent by the data processing unit comprises frame type information.

10. A method according to claim 9, **characterized in that** there is at least one sensor assigned to the data processing unit, which is read by the data processing unit.

11. A method according to claim 10, **characterized in that** the readings from the at least one sensor are transmitted within the frames' (1) reference data (3).

12. A method according to one of the precedent claims, **characterized in that** in response to an evaluation of the frame reference data (3) considered wanted and received by the transceiver or because of the reading of at least one sensor assigned to the data processing unit, at least one actuator, such as a relay or a signaler, is triggered.

13. A method according to claim 7, **characterized in that** at least one bridge is used, preferably for receiving only, to connect the data processing units with a data network, preferably the Internet.

14. A method according to claim 13, **characterized in that** the bridge is used for maintaining a time service by transmitting synchronization signals (4) only.

15. A method according to claim 13 or 14, **characterized in that** positioning information about the transceivers communicating with said bridges can be derived from the position of these bridges.

16. A method according to one of the precedent claims, **characterized in that** CSMA/CR (carrier sense multiple access with collision resolution) protocol is used for determining which of the transceivers in range will be granted channel access.

17. A data processing unit comprising a transceiver and a memory unit, **characterized in** being capable of using the method according to claims 1 to 12.

18. A data processing unit according to claim 17, **characterized in that** the data processing unit is a microcomputer.

19. A data processing unit according to claim 17 or 18, **characterized in that** the data processing unit is assigned at least one sensor, particularly a temperature, acceleration or a microphone sensor, which sensor is built-in with the data processing unit.

20. A data processing unit according to claim 17 or 18, **characterized in that** the data processing unit is assigned at least one sensor, particularly a temperature, acceleration or a microphone sensor, which sensor is joint with the data processing unit in a separate unit.

21. A data processing unit according to one of claims 17 to 20, **characterized in that** the unit is capable of communicating with a data network, preferably the Internet, via a bridge.

22. A data processing unit according to one of claims 17 to 21, **characterized in that** the data processing unit is programmable via its transceiver.

## Patentansprüche

1. Verfahren zum Betreiben eines Transceivers, bei dem der Transceiver in einer Datenverarbeitungseinheit enthalten und imstande ist, von anderen Transceivern Funksignale zu empfangen, die aus einzelnen Rahmen (1) bestehen, wobei diese Rahmen (1) einen Kopf (2) und Nutzdaten (3) umfassen, wobei das Verfahren die folgenden Schritte beinhaltet: das Prüfen des Kopfes (2) jedes Rahmens (1) und, unter Berücksichtigung dieser Prüfung, die Entscheidung, ob die Nutzdaten (3) von dem Transceiver empfangen werden sollen oder nicht, das Schalten des Transceivers in einen Bereitschaftszustand, wenn der Empfang der Nutzdaten (3) des Rahmens (1) als nicht gewünscht erachtet wird, und die Rückkehr in einen aktiven Zustand erst im nächsten Zeitschlitz,
**dadurch gekennzeichnet, dass** der Kopf (2) Informationen über den Rahmentyp enthält, die einen kurzen Hinweis darauf geben, was in dem Nutzdatenblock des Rahmens folgen wird, und der Transceiver eigenständig prüft, ob die Nutzdaten (3) eines Rahmens (1) im Hinblick auf die empfangenen Rahmentyp-Informationen gewünscht oder nicht gewünscht sind.

2. Verfahren nach Anspruch 1, **dadurch gekennzeichnet, dass** jeder Rahmen (1) ein Synchronisationssignal (4) zur Bestimmung eines Zeitschlitzes zum Senden und Empfangen von Rahmen (1) enthält und von den Transceivern eine Synchronisation durchgeführt wird, indem zunächst für eine definierte Zeitdauer nach Synchronisationssignalen (4) gehorcht wird und, falls kein solches empfangen wird, ein Synchronisationssignal (4) gesendet wird oder, falls ein Synchronisationssignal (4) empfangen wird, der lokale Taktgeber (14) eingestellt wird.

3. Verfahren nach Anspruch 2, **dadurch gekennzeichnet, dass** nach der Durchführung der Synchronisation der Transceiver vor Beginn jedes Zeitschlitzes zufällig entscheidet, ob ein Synchronisationssignal (4) gesendet werden soll oder ob der Transceiver nach einem Synchronisationssignal (4) von einem anderen Transceiver horchen soll.

4. Verfahren nach Anspruch 3, **dadurch gekennzeichnet, dass**, falls während des Wartens auf ein Synchronlsatlonssignal (4) ein solches Synchronisationssignal (4) für eine definierte Zeitdauer nicht empfangen wird, der Synchronisationsprozess erneut gestartet wird.

5. Verfahren nach einem der Ansprüche 2 bis 4, **dadurch gekennzeichnet, dass** durch Empfangen und Mitteln überlappender Synchronisationssignale (4) eine Zeitposition der Zeitschlitze bestimmt wird.

6. Verfahren nach einem der Ansprüche 2 bis 5, **dadurch gekennzeichnet, dass** von der Datenverarbeitungseinheit die Zahl weiterer Transceiver, mit denen kommuniziert werden soll, berechnet wird.

7. Verfahren nach Anspruch 6, **dadurch gekennzeichnet, dass** sämtliche Datenverarbeitungseinheiten sämtlicher Transceiver gleichberechtigt kommunizieren, vorzugsweise unter Bildung eines Peer-to-Peer-Netzwerks.

8. Verfahren nach Anspruch 7, **dadurch gekennzeichnet, dass** jede Datenverarbeitungseinheit eine Speichereinheit umfasst, in der Rahmentyp-informationen von Interesse gespeichert sind, und die Datenverarbeitungseinheit Nutzdaten (3) eines Rahmens (1) als gewünscht ansieht, wenn dessen Rahmentyp-Informationen in den Ranmentyp-informationen von Interesse enthalten ist.

9. Verfahren nach einem der vorhergehenden Ansprüche, **dadurch gekennzeichnet, dass** ein von der Datenverarbeitungseinheit gesendeter Rahmen Rahmentyp-Informationen umfasst.

10. Verfahren nach Anspruch 9, **dadurch gekennzeichnet, dass** der Datenverarbeitungseinheit wenigstens ein Sensor zugeordnet ist, der von der Datenverarbeitungseinheit abgelesen wird.

11. Verfahren nach Anspruch 10, **dadurch gekennzeichnet, dass** die Ablesungen von dem wenigstens einen Sensor in den Nutzdaten (3) der Rahmen (1) übertragen werden.

12. Verfahren nach einem der vorhergehenden Ansprüche, **dadurch gekennzeichnet, dass** als Antwort auf eine Evaluierung der als gewünscht erachteten und von dem Transceiver empfangenen Rahmen-Nutzdaten (3) oder aufgrund der Ablesung wenigstens eines der Datenverarbeitungseinheit zugeordneten Sensors wenigstens ein Aktor wie ein Relais oder ein Signalgeber ausgelöst wird.

13. Verfahren nach Anspruch 7, **dadurch gekennzeichnet, dass** wenigstens eine Bridge verwendet wird, vorzugsweise nur zum Empfang, um die Datenverarbeitungseinheiten mit einem Datennetz, vorzugsweise dem Internet, zu verbinden.

14. Verfahren nach Anspruch 13, **dadurch gekennzeichnet, dass** die Bridge verwendet wird, um durch Übertragung von nur Synchronisationssignalen (4) einen Zeitdienst aufrechtzuerhalten.

15. Verfahren nach Anspruch 13 oder 14, **dadurch gekennzeichnet, dass** aus der Position der Bridges Positionsinformationen über die Transceiver, die mit diesen Bridges kommunizieren, abgeleitet werden können.

16. Verfahren nach einem der vorhergehenden Ansprüche, **dadurch gekennzeichnet, dass** ein CSMA/CR-Protokoll (Mehrfachzugriff mit Trägererkennung und Kollisionsauflösung) verwendet wird, um zu bestimmen, welchem der Transceiver in Reichweite Kanalzugang gewährt werden wird.

17. Datenverarbeitungseinheit, umfassend einen Transceiver und eine Speichereinheit, **dadurch gekennzeichnet, dass** sie das Verfahren nach Anspruch 1 bis 12 verwenden kann.

18. Datenverarbeitungseinheit nach Anspruch 17, **dadurch gekennzeichnet, dass** die Datenverarbeitungseinheit ein Mikrocomputer ist.

19. Datenverarbeitungseinheit nach Anspruch 17 oder 18, **dadurch gekennzeichnet, dass** der Datenverarbeitungseinheit wenigstens ein Sensor zugeordnet ist, insbesondere ein Temperatur-, Beschleunigungs- oder ein Mikrophonsensor, wobei dieser Sensor in der Datenverarbeitungseinheit eingebaut ist.

20. Datenverarbeitungseinheit nach Anspruch 17 oder 18, **dadurch gekennzeichnet, dass** der Datenverarbeitungseinheit wenigstens ein Sensor zugeordnet ist, insbesondere ein Temperatur-, Beschleunigungs- oder ein Mikrophonsensor, wobei dieser Sensor mit der Datenverarbeitungseinheit in einer separaten Einheit verbunden ist.

21. Datenverarbeitungseinheit nach einem der Ansprüche 17 bis 20, **dadurch gekennzeichnet, dass** die Einheit über eine Bridge mit einem Datennetz, vorzugsweise dem Internet, kommunizieren kann.

22. Datenverarbeitungseinheit nach einem der Ansprüche 17 bis 21, **dadurch gekennzeichnet, dass** die Datenverarbeitungseinheit über ihren Transceiver programmierbar ist.

## Revendications

1. Procédé d'utilisation d'un émetteur-récepteur, dans lequel ledit émetteur-récepteur est composé d'une unité de traitement de données et peut recevoir depuis d'autres émetteurs-récepteurs des signaux radio composés de trames (1) séparées, ces trames (1) comprenant un en-tête (2) et des données de référence (3), lequel procédé comprend les étapes d'examen de l'en-tête (2) de chaque trame (1) et, compte tenu de cet examen, de décision sur le fait que les données de référence (3) vont ou non être reçues par l'émetteur-récepteur, de commutation de l'émetteur-récepteur dans un état d'attente si la réception des données de référence (3) de la trame (1) n'est pas souhaitée et de retour à un état actif seulement dans le créneau de temps suivant,
**caractérisé en ce que** l'en-tête (2) contient des informations sur le type de trame qui donnent une brève indication de ce qui va suivre dans le bloc de données de référence de la trame, et l'emetteur-recepteur évalue lui-même si les données de référence (3) d'une trame (1) sont souhaitées ou non en fonction des informations sur le type de trame reçues.

2. Procédé selon la revendication 1, **caractérisé en ce que** chaque trame (1) contient un signal de synchronisation (4) destiné à déterminer un créneau de temps pour l'émission et la réception de trames (1) et une synchronisation est réalisée par l'émetteur-récepteur qui se met d'abord à l'écoute des signaux de synchronisation (4) pendant une durée définie et, si aucun n'est reçu, émet un signal de synchronisation (4) ou, si un signal de synchronisation (4) est reçu, règle l'horloge locale (14).

3. Procédé selon la revendication 2, **caractérisé en ce qu'**une fois la synchronisation réalisée, avant le début de chaque créneau de temps, l'émetteur-récepteur décide de façon aléatoire si un signal de synchronisation (4) doit être émis ou si l'émetteur-récepteur doit être à l'écoute d'un signal de synchronisation (4) d'un autre émetteur-récepteur.

4. Procédé selon la revendication 3, **caractérisé en ce que** si, pendant l'attente d'un signal de synchronisation (4), un tel signal de synchronisation (4) n'est pas reçu pendant une durée définie, le processus de synchronisation est relancé.

5. Procédé selon l'une des revendications 2 à 4, **caractérisé en ce qu'**une position dans le temps des créneaux de temps est déterminée en recevant des signaux de synchronisation (4) qui se recouvrent, et en calculant leur moyenne.

6. Procédé selon l'une des revendications 2 à 5, **caractérisé en ce que** le nombre d'autres émetteurs-récepteurs avec lesquels communiquer est évalué par l'unité de traitement de données.

7. Procédé selon la revendication 6, **caractérisé en ce que** toutes les unités de traitement de données de tous les émetteurs-récepteurs communiquent à égalité, de préférence en formant un réseau d'égal à égal *(peer-to-peer).*

8. Procédé selon la revendication 7, **caractérisé en ce que** chaque unité de traitement de données comprend une unité de mémoire dans laquelle sont stockées des informations d'intérêt sur le type de trame, et l'unité de traitement, de données considère que les données de référence (3) d'une trame (1) sont souhaitées quand ses informations sur le type de trame sont comprises dans lesdites informations d'intérêt sur le type de trame.

9. Procédé selon l'une des revendications précédentes, **caractérisé en ce qu'**une trame émise par l'unité de traitement de données contient des informations sur le type de trame.

10. Procédé selon la revendication 9, **caractérisé en ce qu'**au moins un capteur est affecté à l'unité de traitement de données et lu par l'unité de traitement de données.

11. Procédé selon la revendication 10, **caractérisé en ce que** les mesures de l'au moins un capteur sont transmises dans les données de référence (3) des trames (1).

12. Procédé selon l'une des revendications précédentes, **caractérisé en ce qu'**en réponse à une évaluation des données de référence (3) de la trame considérées comme souhaitées et reçues par l'émetteur-recepteur ou en raison de la mesure de l'au moins un capteur affecté à l'unité de traitement de données, au moins un actionneur, tel qu'un relais ou un générateur de signaux, est déclenché.

13. Procédé selon la revendication 7, **caractérisé en ce qu'**au moins un pont est utilisé, de préférence seulement en réception, pour connecter les unités de traitement de données à un réseau de données, de référence à Internet.

14. Procédé selon la revendication 13, **caractérisé en ce que** le pont sert à maintenir un service dans le temps en transmettant seulement des signaux de synchronisation (4).

15. Procédé selon la revendication 13 ou 14, **caractérisé en ce que** des informations de positionnement concernant les émetteur-récepteurs communiquant avec lesdits ponts peuvent être dérivés de la position de ces ponts.

16. Procédé selon l'une des revendications précédentes, **caractérisé en ce que** le protocole CSMA/CR (Carrier Sense Multiple Access/Collision Resolution) est utilisé pour déterminer lequel des émetteurs-récepteurs à portée aura accès au canal.

17. Unité de traitement de données comprenant un émetteur-récepteur et une unité de mémoire, **caractérisée en ce qu'**elle peut utiliser le procédé selon les revendications 1 à 12.

18. Unité de traitement de données selon la revendication 17, **caractérisée en ce que** l'unité de traitement de données est un micro-ordinateur.

19. Unité de traitement de données selon la revendication 17 ou 18, **caractérisée en ce que** l'unité de traitement de données est associée à au moins un capteur, en particulier un capteur de température, d'accélération ou à microphone, lequel capteur est intégré dans l'unité de traitement de données.

20. Unité de traitement de données selon la revendication .17 ou 18, **caractérisé en ce que** l'unité de traitement de données est associée à au moins un capteur, en particulier un capteur de température, d'accélération ou à microphone, lequel capteur est assemblé à l'unité de traitement de données dans une unité séparée.

21. Unité de traitement de données selon l'une des revendications 17 à 20, **caractérisée en ce que** l'unité est en mesure de communiquer avec un réseau de données, de préférence avec Internet, en passant par un pont.

22. Unité de traitement de données selon l'une des revendications 17 à 21, **caractérisée en ce que** l'unité de traitement de données est programmable en passant par son émetteur* récepteur.
